# EUROPÄISCHE PATENTSCHRIFT

(11) **EP 2 617 602 B1**
(45) Veröffentlichungstag und Bekanntmachung des Hinweises auf die Patenterteilung: **06.04.2016**
(21) Anmeldenummer: 12194607.3
(22) Anmeldetag: 28.11.2012
(51) Int. Cl.: B60P 7/08, B60J 7/10, B60J 5/06

(54) **Ratschenanordnung zum Spannen aufwickelbarer Gegenstände**
Ratchet device for tensioning coilable objects
Dispositif à rochet pour étirer des objets pouvant être enroulés

(30) Priorität: 17.01.2012 DE 202012100152 U
(43) Veröffentlichungstag der Anmeldung: 24.07.2013
(73) Patentinhaber: F. HESTERBERG & SÖHNE GmbH & Co. KG, 58256 Ennepetal (DE)
(72) Erfinder: Breme, Stefan, 58339 Breckerfeld (DE); Feinbier, Joachim, 58256 Ennepetal (DE); Krüger, Friedrich, 58256 Enneptal (DE); Tiedtke, Henning, 58256 Enneptal (DE)
(74) Vertreter: Bungartz Christophersen Partnerschaft mbB Patentanwälte

(56) Entgegenhaltungen:
- EP-A2- 1 900 569
- DE-A1-102004 059 339
- GB-A- 2 258 805

## Beschreibung

Die Erfindung betrifft eine Ratschenanordnung zum Spannen aufwickelbarer Gegenstände nach dem Oberbegriff des Anspruchs 1.

Eine solche Ratschenanordnung ist aus der EP 1 900 569 A2 bekannt. Sie kann verwendet werden, um durch Aufwickeln eines Gurtes oder eines anderen aufwickelbaren Zugelementes z.B. das Frachtgut eines Lastkraftwagens zu sichern. Vor allem aber werden solche Ratschenanordnungen verwendet, um die Seitenplanen eines Lastkraftwagens zu spannen. An einem Basisteil, welches am Nutzfahrzeugaufbau befestigt ist, ist auf derselben Achse sowohl ein als Spannelement dienendes, gezahntes Ratschenrad drehbar, als auch ein Handhebel schwenkbar gelagert. Dem Antrieb des Ratschenrades dient ein Klinkenmechanismus aus einer Mitnahmeklinke an dem Handhebel und einer Sperrklinke an dem Basisteil. Durch Hin- und Herschwenken des Handhebels lässt sich das Ratschenrad antreiben und damit der Spannvorgang durchführen. Zusätzlich ist ein Mechanismus zum Aufheben der Spannkraft integriert.

Bei der Ratschenanordnung nach der EP 1 900 569 A2 ist die Sperrklinke schwenkbeweglich auf einer an dem Basisteil angeordneten Klinkenachse gelagert und der Klinkenachse abgewandt, mit einer gegen eine Flanke der Zahnung gerichteten Sperrfläche versehen. Die Bauart hat zur Folge, dass bei sehr großen Spannkräften die Kraftkomponenten dauerhaft auf die Klinkenachse wirken, die unter solchen Belastungen verformen oder nachgeben kann, was unerwünscht ist.

Bei einer anderen Ratschenanordnung gemäß der DE 10 2004 059 339 A1 ist das bewegliche Sperrelement nicht drehbeweglich auf einer Achse gelagert, sondern diese Funktion wird von einem Sperrschieber mit daran ausgebildeter Sperrnase übernommen, wobei der Sperrschieber großflächig gegen das Basisteil abgestützt ist.

Der Erfindung liegt die Aufgabe zugrunde, die bekannte Ratschenanordnung hinsichtlich der im Dauerbetrieb ausgehend von den Spannkräften wirkenden Kräfte und Belastungen stabiler zu gestalten.

Zur Lösung wird bei einer Ratschenanordnung mit den Merkmalen des Oberbegriffs vorgeschlagen, dass die Sperrklinke, räumlich getrennt von der Klinkenachse, mit einer von der Sperrfläche abgewandt angeordneten Stützfläche zur Anlage an einer am Basisteil ausgebildeten Gegenfläche versehen ist.

Die im normalen Betriebszustand dauerhaft auf die Sperrklinke einwirkenden Kräfte werden daher nicht ausschließlich über die Klinkenachse abgeleitet, sondern zumindest zum Teil auch über eine zusätzliche Stützfläche. Da sich die kraftaufnehmende Gegenfläche direkt am Basisteil befindet, kann es zu keinen nennenswerten plastischen Verformungen kommen. Insgesamt lässt sich das mit der Ratschenanordnung auf Dauer aufrechtzuerhaltende Drehmoment steigern.

Hinsichtlich der Position der Stützfläche an der Sperrklinke wird mit einer Ausgestaltung der Ratschenanordnung vorgeschlagen, dass sich diese Position seitlich zu der Verbindungslinie zwischen der Sperrfläche und der Klinkenachse, und zugleich zwischen der durch die Sperrfläche gebildeten Ebene und einer zu dieser Ebene parallelen Ebene durch die Klinkenachse befindet.

Mit einer weiteren Ausgestaltung wird vorgeschlagen, dass sich das Basisteil aus einer Grundplatte und zwei dazu rechtwinkligen Seitenteilen zusammensetzt, und dass sich die Klinkenachse der Sperrklinke bis in Bohrungen in beiden Seitenteilen erstreckt. Diese Maßnahmen führen zu einer Verstärkung auch im Bereich der Klinkenachse, so dass auch diese, ergänzend zu der Kraftaufnahme durch die zusätzliche Stützfläche, einen wesentlichen Beitrag bei der Abführung der hohen Drehmomente auf das Basisteil leisten kann.

Mit einer weiteren Ausgestaltung wird vorgeschlagen, dass sich die Gegenfläche an einem Vorsprung befindet, der an dem Basisteil einstückig angeformt ist.

Hinsichtlich der anderen Klinke, also der Mitnahmeklinke, wird mit einer weiteren Ausgestaltung vorgeschlagen, dass diese schwenkbar auf einer an dem Handhebel angeordneten Klinkenachse gelagert ist, und dass an der Mitnahmeklinke, deren Klinkenachse abgewandt, eine gegen die Arbeitsflanke der Zahnung gerichtete Druckfläche ausgebildet ist. Diese Druckfläche greift beim Spannvorgang durch Aufschwenken des Handhebels in die Zahnung des Ratschenrades ein.

Um auch bei beengten räumlichen Verhältnissen ein sicheres Aufheben der Spannkraft zu ermöglichen, ist eine weitere Ausgestaltung der Ratschenanordnung gekennzeichnet durch einen zwischen einer Grundstellung und mindestens einer Entriegelstellung beweglich an dem Handhebel gelagerten Riegel. Der Riegel verriegelt den Handhebel in der Grundstellung formschlüssig an dem Basisteil, und gibt ihn in der Entriegelstellung frei. Zusätzlich zu der Grund- und der Entriegelstellung ist der Riegel in eine Freilaufstellung beweglich gestaltet, in welcher ein an dem Riegel ausgebildetes Druckelement die Sperrklinke außer Eingriff in das Ratschenrad hält.

Das Aufheben der Spannkraft erfolgt daher nicht durch ein weites Öffnen des Spannhebels, sondern durch ein Schließen des Handhebels - allerdings bei gleichzeitiger Betätigung des in dem Handhebel gelagerten Riegels. Auf diese Weise ist auch im Falle beengter räumlicher Verhältnisse, welche ein weites Öffnen des Handhebels nicht zulassen, ein sicheres Aufheben der Spannkraft möglich.

Weitere Einzelheiten und Vorteile ergeben sich aus der nachfolgenden Beschreibung von Ausführungsbeispielen und unter Bezugnahme auf die Zeichnungen. Darin zeigen:
- Fig. 1: in perspektivischer Darstellung eine mit einem Ratschenmechanismus ausgestattete Spannvorrichtung zum Spannen von Gurten und Planen;
- Fig. 2: einen Längsschnitt durch die Spannvorrichtung, wobei deren Handhebel verriegelt ist;
- Fig. 3: einen Längsschnitt bei freigegebenem Riegel;
- Fig. 4: einen Längsschnitt während des Spannvorgangs bei angewinkeltem Handhebel;
- Fig. 5: einen Längsschnitt in einer Freigabe - bzw. Freilaufstellung;
- Fig. 6: eine Teilvergrößerung aus Fig. 2, und
- Fig. 7: für eine zweite Ausführungsform den vergrößerten Teilbereich der Ratschenanordnung wie bei Fig. 6.

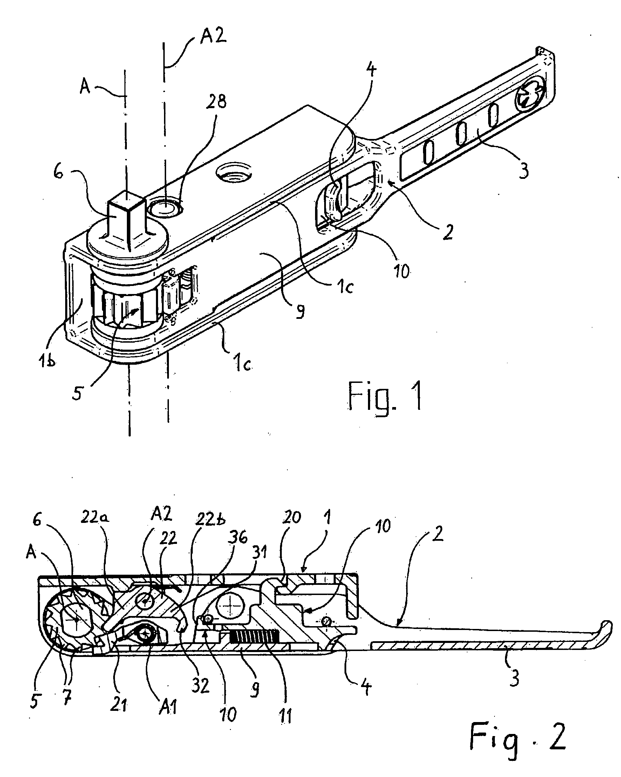

Die Fign. 1 und 2 zeigen eine Ratschenspannvorrichtung in ihrer Grundstellung. Deren Basisteil 1 ist mittels mehrerer Schrauben an einem Nutzfahrzeugaufbau befestigt. Das Basisteil 1 besteht aus einer am Fahrzeugaufbau abgestützten Grundplatte 1 b und zwei dazu rechtwinklingen Seitenwänden 1c. Schwenkbar in Bezug auf eine Drehachse A ist an dem Basisteil 1 ein Handhebel 2 gelagert, welcher an seinem anderen Ende einen Handgriff 3 aufweist. Nahe des Handgriffs 3 befindet sich in dem Handhebel eine Betätigungstaste 4 für einen Riegel.

Ebenfalls auf der Drehachse A gelagert ist ein Ratschenrad 5, welches mit einer Zahnung 7 aus über den Umfang des Ratschenrades gleichmäßig verteilten Flanken 7a und Gegenflanken 7b versehen ist. Die steileren Flanken 7a sind die Arbeitsflanken. Das Ratschenrad 5 ist aus einer Bohrung in der Seitenwand 1c des Basisteil 1 heraus verlängert, und weist dort einen Schlitz oder einen als Antrieb dienenden Mehrkant 6 auf. Der Schlitz oder Mehrkant 6 dient dazu, dort einen wickelfähigen Gegenstand aufzuwickeln, etwa einen Spanngurt oder das Ende einer aufzuwickelnden Plane. Zur Verwirklichung der Wickel-Drehachse A sind die Seitenwände 1c mit Bohrungen versehen, in denen das gezahnte Ratschenrad 5 gelagert ist. Auf derselben Drehachse A, jedoch unabhängig von dem Ratschenrad 5, erfolgt die Schwenklagerung des Handhebels 2.

In dem Handhebel 2 ist, verdeckt durch dessen Außenwand 9, ein Riegel 10 längsbeweglich gelagert. In dieser Längsrichtung ist der Riegel 10 durch eine andererseits an einer Fläche des Handhebels 2 anliegende Feder 11 beaufschlagt. Die Feder 11 drückt den Riegel 10 in Richtung zu dem Handgriff 3 bzw. zu der Betätigungstaste 4 hin. Die Betätigungstaste 4 für den Riegel 10 ist hier als Daumendrucktaste gestaltet, die einstückig an dem Riegel 10 angeformt ist.

An dem in dem Handhebel 2 längsgeführten Riegel 10 befindet sich ein Sperrhaken 18, welcher bei verriegeltem Handhebel eine an dem Basisteil 1 ausgebildete Sperrfläche 19 hintergreift. Bei der Sperrfläche 19 handelt es sich um einen Steg, welcher durch Umformen des entsprechenden Bereiches der Grundplatte 1 b hergestellt ist.

Der Sperrfläche 19 abgewandt ist der Sperrhaken 18 mit einer Einführschräge 20 versehen. Diese weist eine solche Neigung und Erstreckung auf, dass, wenn der zunächst geöffnete Handhebel 2 wieder in das Basisteil 1 zurück verschwenkt wird, der Riegel durch die Sperrfläche 19 und entgegen der Kraft der Feder 11 zurück gedrückt wird, und anschließend hinter der Sperrfläche 19 einschnappt. Zum Schließen des Handhebels 2 ist es daher ausreichend, den Handhebel 2 einfach gegen das Basisteil 1 anzudrücken.

Nahe zu dem Ratschenrad 5 ist in dem Handhebel 2 auf einer ersten Klinkenachse A1 eine Mitnahmeklinke 21 schwenkbar gelagert. Ebenfalls nahe zu dem Ratschenrad 5 ist in dem Basisteil 1 auf einer in beiden Seitenwänden 1c drehgelagerten zweiten Klinkenachse A2 eine Sperrklinke 22 schwenkbar gelagert. Die beiden Achsen A1, A2 verlaufen parallel zueinander und parallel zu der Drehachse A des Ratschenrades 5.

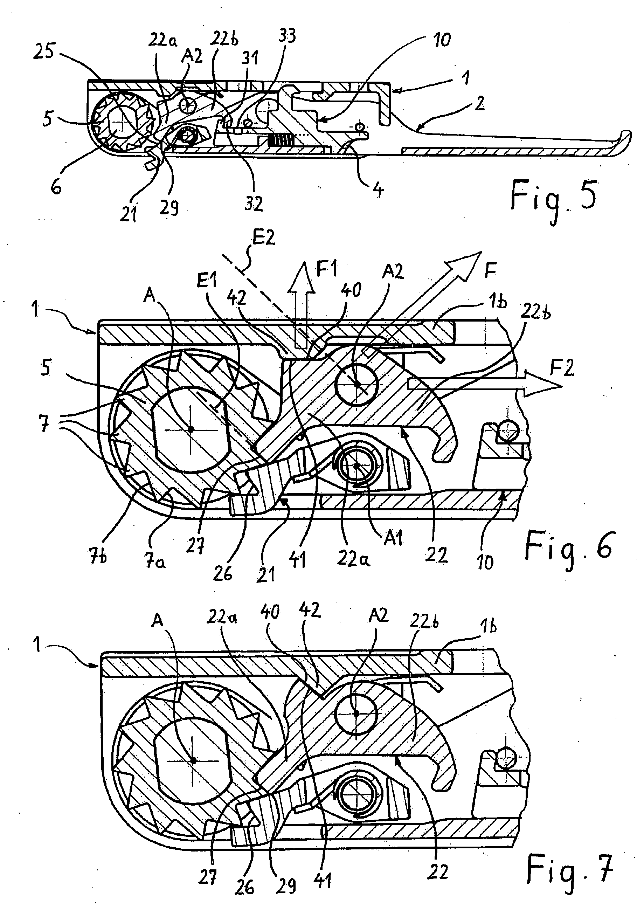

Die Mitnahmeklinke 21 und die Sperrklinke 22 sind jeweils als Wippen gestaltet und jeweils mit einer Feder 23 versehen, welche bestrebt ist, die an den Klinken 21, 22 ausgebildeten Druck- und Sperrflächen 26 bzw. 27 (Fig. 6) gegen die jeweilige Flanke 7a der an dem Ratschenrad 5 angeformten Zahnung 7 anzudrücken.

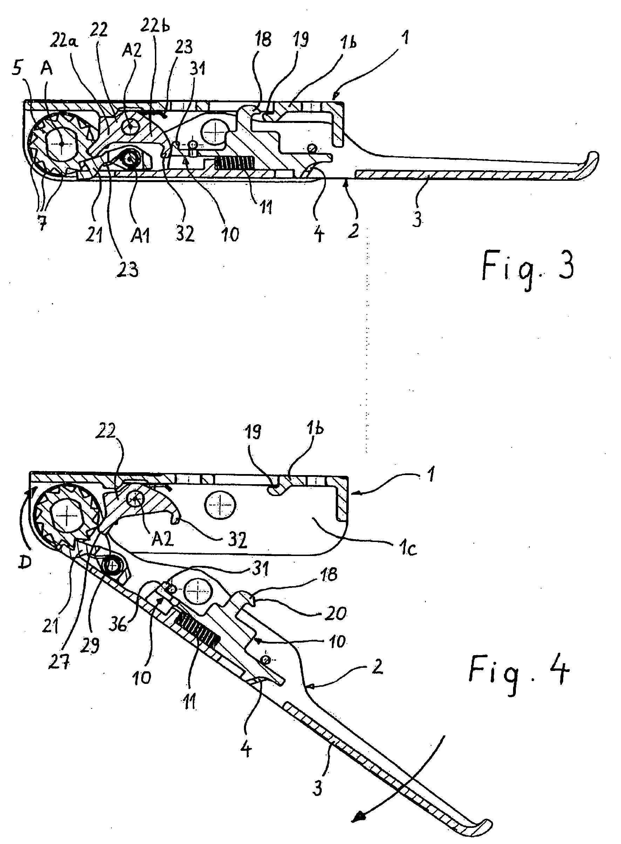

Die Mitnahmeklinke 21 weist eine glattflächige Innenseite 25 auf, sowie einen Klinkenvorsprung, dessen Gestalt in der Weise an die Zahnkontur des Ratschenrades 5 angepasst, dass die Mitnahmeklinke 21 mit der an dem Klinkenvorsprung angeordneten Druckfläche 26 das Ratschenrad 5 in Drehrichtung D anzutreiben vermag, wenn der Handhebel 2 gemäß Fig. 4 aufgeschwenkt wird. Der Eingriff der Mitnahmeklinke 21 in das Ratschenrad 5 erfolgt also dann, wenn der Handhebel 2 gemäß Fig. 4 nach außen von dem Basisteil 1 weggeschwenkt wird. Hingegen greift die an dem Basisteil 1 gelagerte Sperrklinke 22 dann und solange in das Ratschenrad 5 ein, wie der Handhebel 2 wieder zurück in Richtung auf das Basisteil 1 geschwenkt wird. In diesem Fall blockiert die Sperrfläche 27 am Klinkenvorsprung der Sperrklinke 22 das Ratschenrad 5 gegen ein Zurückdrehen entgegen der Drehrichtung D, indem sich die Sperrfläche 27 frontal gegen die Flanke 7a des jeweiligen Zahns stützt.

Durch wechselweises Hin- und Herschwenken des Handhebels 2 wird also das Ratschenrad 5 um die Achse A sukzessive in Drehrichtung D angetrieben, um so den Spannvorgang durchzuführen.

Die Sperrklinke 22 ist wippenförmig mit zwei Armen 22a, 22b gestaltet, zwischen denen sich die Klinkenachse A2 befindet. Diese erstreckt sich mit ihren beiden Endabschnitten in Bohrungen 28 (Fig. 1) in den zwei Seitenteilen 1c.

An der Sperrfläche 27 oder nahe dazu befindet sich am Arm 22a der Sperrklinke 22 ein Mitnehmerelement 29, hier als Ecke der Sperrfläche 27 ausgebildet. Bei einem entsprechenden Verschwenken der Sperrklinke 22 stößt das Mitnehmerelement 29 gegen die angrenzende Seite 25 (Fig. 5) der Mitnahmeklinke 21, wodurch die Sperrklinke 22 die Mitnahmeklinke 21 mitnimmt, und beide Klinken 21, 22 zugleich den Eingriff in das Ratschenrad 5 verlieren. Diese Funktion wird nun näher erläutert.

Ist der Handhebel 2 leicht geöffnet, sitzt der federbelastete Riegel 10 durch Nichtbetätigung der Betätigungstaste 4 in seiner Normalstellung. Wird in dieser Stellung der Riegel 10 zu der Drehachse A hin vorgeschoben, so gelangt ein an dem Riegel 10 ausgebildeter Vorsprung 31 bis unter und hinter einen Vorsprung 32, welcher am Klinkenarm 22b der Sperrklinke 22 ausgebildet ist. Der Vorsprung 31 ist an dem Riegel 10 zu dem Basisteil 1 hin, und der Vorsprung 32 an der Sperrklinke 22 zu dem Handhebel 2 hin gerichtet. Zudem befindet sich der Vorsprung 32 an jenem Arm 22b der wippenförmig gestalteten Sperrklinke 22, welcher dem Klinkenvorsprung 27 der Sperrklinke 22 abgewandt ist. Dies hat zur Folge, dass gemäß Fig. 5 nach Schließen des Handhebels die Vorsprünge 31, 32 einander hintergreifen, und auf diese Weise der Riegel 10 in seiner am weitesten zur Drehachse A hin vorgeschobenen Stellung durch die Sperrklinke 22 arretiert wird. Selbst wenn jetzt der Riegel 10 losgelassen wird, verharrt der Riegel 10 in der so eingenommenen und in Fig. 5 dargestellten Freilaufstellung. In dieser Stellung ist der Riegel 10 daher noch weiter vorgeschoben, als für die bloße Entriegelung des Riegels 10 (Fig. 3) erforderlich.

Nur bei zumindest etwas angewinkeltem Handhebel 2 kann durch entsprechendes Verschieben des Riegels 10 dessen Vorsprung 31 bis hinter den Vorsprung 32 verfahren werden.

Hingegen lässt sich der Riegel aus seiner Grundstellung (Fig. 2) nicht bis in seine Freilaufstellung (Fig. 5) bewegen. Denn in diesem Fall stößt ein an dem Riegel 10 ausgebildeter Endbereich 36, an dem sich auch der Vorsprung 31 befindet, von außen gegen die Sperrklinke 22 oder gegen den daran ausgebildeten Vorsprung 32. Dieses Anstoßen ist in Fig. 3 dargestellt. Aus der Grundstellung nach Fig. 2 lässt sich der Riegel 10 daher höchstens bis in die Entriegelstellung Fig. 3 verschieben, und nicht bis in die Freilaufstellung Fig. 5.

In der Freilaufstellung nach Fig. 5 drückt der Riegel 10 mit einer daran ausgebildeten Fläche 33 so gegen den Klinkenarm 22b, dass die Sperrklinke 22 außer Eingriff mit dem Ratschenrad 5 gelangt. Zugleich nimmt, wie bereits beschrieben, das Mitnehmerelement 29 des Klinkenarms 22a die Mitnahmeklinke 21 mit, wodurch diese ebenfalls von dem Ratschenrad 5 wegdreht und den Eingriff in die Verzahnung außen am Ratschenrad verliert. Auf diese Weise wird das Ratschenrad 5 frei beweglich im Sinne eines Freilaufs. Für die Freilaufbetätigung der Klinken 22, 21 ist der Riegel mit einem geeigneten Druckelement 33 versehen. Das Druckelement 33 ist hier die Fläche an dem Riegel 10, gegen die der Klinkenarm 22b stößt, wodurch die Sperrklinke 22 in ihrer Freilaufstellung gehalten wird.

Wie vor allem Fig. 6 wegen des vergrößerten Maßstabes erkennen lässt, ist die Sperrklinke 22, räumlich getrennt von der Klinkenachse A2, zusätzlich mit einer von der Sperrfläche 27 abgewandt angeordneten Stützfläche 40 versehen. Die Stützfläche 40 gelangt, wenn die Sperrklinke 22 das Ratschenrad 5 sperrt, zur Anlage an einer Gegenfläche 41. Diese Gegenfläche 41 befindet sich an einem Vorsprung 42, der einstückig an der Grundplatte 1b des Basisteils 1 mit angeformt ist.

Der Vorteil der zusätzlichen Stützfläche 40 liegt in einer Aufteilung der auf das Basisteil 1 abzuleitenden Kräfte, die durch das erhebliche, am Ratschenrad 5 wirkende Drehmoment verursacht werden. Dieses erhebliche Drehmoment wirkt über die Flanke 7a auf die vorzugsweise flächig an dieser Flanke 7a anliegende Sperrfläche 27, und führt zu einer Kraft F, die auf das Basisteil 1 abgeleitet werden muss. Aufgrund der genannten Gestaltung wirkt jedoch nur ein Teil der Kraft F auf die Klinkenachse A2 bzw. die durch die Klinkenachse A2 erzielte Drehlagerung hingegen wird ein Kraftanteil F1 über die Stützfläche 40 der Sperrklinke und die Gegenfläche 41 auf direktem Wege auf die Grundplatte 1b des Basisteils 1 übertragen. Diese zu einer erhöhten Stabilität führende Kraftaufteilung ist in Fig. 6 anhand der im Parallelogramm aufgeteilten Kräfte F1 und F2 sowie der resultierenden Kraft F illustriert. Der Kraftanteil F1 wird über die zusätzliche Stützfläche 40 abgeleitet, wodurch die Belastung an der Klinkenachse A2 geringer wird.

Zur Ableitung der Teilkraft F1 ist die Position der Stützfläche 40 an der Sperrklinke 22 von Bedeutung. Diese Position sollte sich
- seitlich zu der gedachten Verbindungslinie zwischen der Sperrfläche 27 und der Klinkenachse A2, und zugleich
- zwischen der durch die Sperrfläche 27 gebildeten Ebene E1 und einer zu dieser Ebene E1 parallelen Ebene E2, die durch die Klinkenachse A2 verläuft,
befinden. Dadurch ist konstruktiv sichergestellt, dass der Kraftanteil F1 nicht die Klinkenachse A2 belastet.

In Fig. 7 ist eine zweite Ausführungsform mit einer anderen Anordnung der Stützfläche 40 an der Sperrklinke 22 und der Gegenfläche 41 an dem hier im Wesentlichen dreieckförmigen Vorsprung 42 des Basisteils 1 wiedergegeben.

### Bezugszeichenliste

- 1: Basisteil
- 1 b: Grundplatte
- 1 c: Seitenwand
- 2: Handhebel
- 3: Handgriff
- 4: Betätigungstaste
- 5: Ratschenrad
- 6: Mehrkant
- 7: Zahnung
- 7a: Flanke
- 7b: Gegenflanke
- 9: Außenwand
- 10: Riegel
- 11: Feder
- 18: Sperrhaken
- 19: Sperrfläche
- 20: Einführschräge
- 21: Mitnahmeklinke
- 22: Sperrklinke
- 22a: Arm
- 22b: Arm
- 23: Feder
- 25: Seite der Mitnahmeklinke
- 26: Druckfläche
- 27: Sperrfläche
- 28: Bohrung
- 29: Mitnehmerelement
- 31: Vorsprung
- 32: Vorsprung
- 33: Druckelement
- 36: Endbereich
- 40: Stützfläche
- 41: Gegenfläche
- 42: Vorsprung

- A: Drehachse
- A1: Achse
- A2: Achse
- D: Drehrichtung
- E1: Ebene
- E2: Ebene
- F: Kraft
- F1: Kraft
- F2: Kraft

## Patentansprüche

1. Ratschenanordung zum Spannen aufwickelbarer Gegenstände, mit einem ein mit einer Zahnung (7) versehenes Ratschenrad (5) drehbar lagernden Basisteil (1), einem auf derselben Drehachse (A) wie das Ratschenrad (5) schwenkbar zu dem Basisteil (1) gelagerten Handhebel (2), und einem Klinkenmechanismus zum Eingriff in die Zahnung (7), wobei sich der Klinkenmechanismus zusammensetzt aus einer beweglich an dem Handhebel (2) gelagerten Mitnahmeklinke (21) sowie einer Sperrklinke (22), die schwenkbar auf einer an dem Basisteil (1) angeordneten Klinkenachse (A2) gelagert ist und an der, der Klinkenachse (A2) abgewandt, eine gegen eine Arbeitsflanke (7a) der Zahnung (7) gerichtete Sperrfläche (27) ausgebildet ist,
**dadurch gekennzeichnet,**
**dass** die Sperrklinke (22), räumlich getrennt von der Klinkenachse (A2), mit einer von der Sperrfläche (27) abgewandt angeordneten Stützfläche (40) zur Anlage an einer am Basisteil (1) ausgebildeten Gegenfläche (41) versehen ist.

2. Ratschenanordnung nach Anspruch 1, **dadurch gekennzeichnet, dass** sich die Position der Stützfläche (40) an der Sperrklinke (22)
- seitlich zu der Verbindungslinie zwischen der Sperrfläche (27) und der Klinkenachse (A2), und zugleich
- zwischen der durch die Sperrfläche (27) gebildeten Ebene (E1) und einer zu dieser Ebene parallelen Ebene (E2) durch die Klinkenachse (A2)
befindet.

3. Ratschenanordnung nach Anspruch 1 oder Anspruch 2, **dadurch gekennzeichnet, dass** sich das Basisteil (1) aus einer Grundplatte (1b) und zwei dazu rechtwinkligen Seitenteilen (1c) zusammensetzt, und dass sich die Klinkenachse (A2) der Sperrklinke (22) bis in Bohrungen (28) in beiden Seitenteilen (1 c) erstreckt.

4. Ratschenanordnung nach einem der vorangehenden Ansprüche, **dadurch gekennzeichnet, dass** sich die Gegenfläche (41) an einem Vorsprung (42) befindet, und der Vorsprung (42) einstückig an dem Basisteil (1) angeformt ist.

5. Ratschenanordnung nach einem der vorangegangenen Ansprüche, **dadurch gekennzeichnet, dass** die Mitnahmeklinke (21) schwenkbar auf einer an dem Handhebel (2) angeordneten Klinkenachse (A1) gelagert ist, und dass an der Mitnahmeklinke (21), der Klinkenachse (A1) abgewandt, eine gegen die Arbeitsflanke (7a) der Zahnung (7) gerichtete Druckfläche (26) ausgebildet ist.

6. Ratschenanordnung nach Anspruch 5, **gekennzeichnet durch** ein an einer der beiden Klinken (22, 21) ausgebildetes Mitnehmerelement (29), welches in der Außereingriffstellung der einen Klinke (22 bzw. 21) auch die andere Klinke (21 bzw. 22) außer Eingriff in das Ratschenrad (5) hält.

7. Ratschenanordnung nach Anspruch 6, **dadurch gekennzeichnet, dass** das Mitnehmerelement (29) eine an der Sperrklinke (22) ausgebildete Kontur ist, welche an die mit der Zahnung (7) des Ratschenrades (5) zusammenwirkende Sperrfläche (27) angrenzt.

8. Ratschenanordnung nach einem der vorangehenden Ansprüche, **gekennzeichnet durch** einen zwischen einer Grundstellung und mindestens einer Entriegelstellung beweglich an dem Handhebel (2) gelagerten Riegel (10), welcher den Handhebel (2) in der Grundstellung formschlüssig an dem Basisteil (1) verriegelt, und in der Entriegelstellung freigibt, wobei der Riegel (10) zusätzlich zu Grund- und Entriegelstellung in eine Freilaufstellung beweglich gestaltet ist, in welcher ein an dem Riegel (10) ausgebildetes Druckelement (33) die Sperrklinke (22) außer Eingriff in das Ratschenrad (5) hält.

9. Ratschenanordnung nach Anspruch 8, **dadurch gekennzeichnet, dass** der Riegel (10) längsbeweglich an dem Handhebel (2) gelagert ist.

10. Ratschenanordnung nach Anspruch 8 oder 9, **gekennzeichnet durch** Wegbegrenzungsmittel (32; 31, 36), welche bei geschlossenem Handhebel (2) eine Bewegung des Riegels (10) in seine Freilaufstellung blockieren.

11. Ratschenanordnung nach Anspruch 10, **dadurch gekennzeichnet, dass** die Wegbegrenzungsmittel aus einem als Vorsprung (32) ausgebildeten Anschlag an der Sperrklinke (22) und einem Gegenanschlag (31, 36) an dem Riegel (10) bestehen.

12. Ratschenanordnung nach einem der vorangehenden Ansprüche, **gekennzeichnet durch** Rückhaltemittel (32, 31), welche den Riegel (10) bei geschlossenem Handhebel (2) in seiner Freilaufstellung blockieren, wobei die Rückhaltemittel aus sich in Bewegungsrichtung des Riegels (10) gegenseitig hintergreifenden Vorsprüngen (32, 31) an der Sperrklinke (22) und dem Riegel (10) bestehen.

## Claims

1. Ratchet arrangement for tensioning coilable articles, having a base part (1) which rotatably bears a ratchet wheel (5) provided with a toothing (7), a hand lever (2) which is mounted on the same axis of rotation (A) as the ratchet wheel (5) in such a way as to be able to pivot relative to the base part (1), and a pawl mechanism for engaging in the toothing (7), wherein the pawl mechanism is composed of an entraining pawl (21), which is mounted movably on the hand lever (2), and of a locking pawl (22), which is mounted pivotably on a pawl axis (A2) arranged on the base part (1) and on which there is formed, facing away from the pawl axis (A2), a locking face (27) which is directed towards a working flank (7a) of the toothing (7), **characterized in that** the locking pawl (22) is provided, spatially separate from the pawl axis (A2), with a support face (40) for bearing against a counter-face (41) formed on the base part (1), said support face facing away from the locking face (27).

2. Ratchet arrangement according to claim 1, **characterized in that** the position of the support face (40) on the locking pawl (22) is
- to the side of the connecting line between the locking face (27) and the pawl axis (A2) and at the same time
- between the plane (E1) formed by the locking face (27) and a plane (E2) running parallel to said plane and through the pawl axis (A2).

3. Ratchet arrangement according to claim 1 or claim 2, **characterized in that** the base part (1) is composed of a base plate (1b) and two side parts (1c) arranged at right angles thereto, and **in that** the pawl axis (A2) of the locking pawl (22) extends into bores (28) in both side parts (1c).

4. Ratchet arrangement according to any one of the preceding claims, **characterized in that** the counter-face (41) is located on a protrusion (42), and the protrusion (42) is integrally formed on the base part (1).

5. Ratchet arrangement according to any one of the preceding claims, **characterized in that** the entraining pawl (21) is mounted pivotably on a pawl axis (A1) arranged on the hand lever (2), and **in that** there is formed on the entraining pawl (21), facing away from the pawl axis (A1), a pressing face (26) which is directed towards the working flank (7a) of the toothing (7).

6. Ratchet arrangement according to claim 5, **characterized by** an entraining element (29) which is formed on one of the two pawls (22, 21) and which, in the non-engaged position of one pawl (22 or 21), also keeps the other pawl (21 or 22) out of engagement with the ratchet wheel (5).

7. Ratchet arrangement according to claim 6, **characterized in that** the entraining element (29) is a contour which is formed on the locking pawl (22) and which adjoins the locking face (27) that cooperates with the toothing (7) of the ratchet wheel (5).

8. Ratchet arrangement according to any one of the preceding claims, **characterized by** a catch (10) mounted on the hand lever (2) in such a way as to be movable between a basic position and at least one unlocked position, which catch in the basic position locks the hand lever (2) to the base part (1) with a form fit and releases it in the unlocked position, wherein the catch (10) is designed in such a way as to be able to move into a freewheel position in addition to the basic position and unlocked position, in which freewheel position a pressing element (33) formed on the catch (10) keeps the locking pawl (22) out of engagement with the ratchet wheel (5).

9. Ratchet arrangement according to claim 8, **characterized in that** the catch (10) is mounted on the hand lever (2) in such a way as to be able to move longitudinally.

10. Ratchet arrangement according to claim 8 or 9, **characterized by** travel-limiting means (32; 31, 36) which, when the hand lever (2) is closed, block a movement of the catch (10) into its freewheel position.

11. Ratchet arrangement according to claim 10, **characterized in that** the travel-limiting means consist of a stop configured as a protrusion (32) on the locking pawl (22) and a counter-stop (31, 36) on the catch (10).

12. Ratchet arrangement according to any one of the preceding claims, **characterized by** retaining means (32, 31) which, when the hand lever (2) is closed, block the catch (10) in its freewheel position, wherein the retaining means consist of protrusions (32, 31) on the locking pawl (22) and the catch (10), which protrusions engage behind one another in the movement direction of the catch (10).

## Revendications

1. Dispositif à cliquet pour le serrage d'objets enroulables, avec une partie de base (1) logeant de manière rotative une roue à cliquet (5) munie d'une denture (7), un levier (2), logé de manière pivotante par rapport à la partie de base (1) sur le même axe de rotation (A) que la roue à cliquet (5), et un mécanisme à cliquet pour destiné à être emboîté dans la denture (7), le mécanisme à cliquet étant constitué d'un cliquet d'entraînement (21) logé de manière mobile sur le levier (2) ainsi que d'un cliquet de blocage (22) qui est logé de manière pivotante sur un axe de cliquet (A2) disposé sur la partie de base (1) et, au niveau duquel, opposé à l'axe du cliquet (A2), se trouve une surface de blocage (27) orientée contre un flanc de travail (7a) de la denture (7),
**caractérisé en ce que**
le cliquet de blocage (22), séparé physiquement de l'axe de cliquet (A2), est muni d'une surface d'appui (40) disposée à l'opposé de la surface de blocage (27), pour un appui contre une contre-surface (41) réalisée sur la partie de base (1).

2. Dispositif à cliquet selon la revendication 1, **caractérisé en ce que** la position de la surface d'appui (40) se trouve sur le cliquet de blocage (22)
- latéralement par rapport à la ligne de liaison entre la surface de blocage (27) et l'axe du cliquet (A2) et en même temps
- entre le plan (E1) formé par la surface de blocage (27) et un plan (E2), parallèle à celui-ci, à travers l'axe du cliquet (A2).

3. Dispositif à cliquet selon la revendication 1 ou 2, **caractérisé en ce que** la partie de base (1) est constituée d'une plaque de base (1b) et de deux parties latérales perpendiculaires (1c) et **en ce que** l'axe de cliquet (A2) du cliquet de blocage (22) s'étend jusque dans des perçages (28) dans les deux parties latérales (1c).

4. Dispositif à cliquet selon l'une des revendications précédentes, **caractérisé en ce que** la contre-surface (41) se trouve sur une saillie (42) et la saillie (42) est formée d'une seule pièce sur la partie de base (1).

5. Dispositif à cliquet selon l'une des revendications précédentes, **caractérisé en ce que** le cliquet d'entraînement (21) est logé de manière pivotante sur un axe de cliquet (A1) disposé sur le levier (2) et **en ce que**, au niveau du cliquet d'entraînement (21), opposé à l'axe de cliquet (A1), se trouve une surface de pression (26) orientée contre le flanc de travail (7a) de la denture (7).

6. Dispositif à cliquet selon la revendication 5, **caractérisé par** un élément d'entraînement (29) disposé au niveau d'un des deux cliquets (22, 21), qui maintient, dans la position hors emboitement d'un cliquet (22 resp. 21), également l'autre cliquet (21 resp. 22) hors emboîtement dans la roue à cliquet (5).

7. Dispositif à cliquet selon la revendication 6, **caractérisé en ce que** l'élément d'entraînement (29) est un contour réalisé sur le cliquet de blocage (22), qui est adjacent à la surface de blocage (27) interagissant avec la denture (7) de la roue à cliquet (5).

8. Dispositif à cliquet selon l'une des revendications précédentes, **caractérisé par** un verrou (10) logé de manière mobile entre une position de base et au moins une position de déverrouillage sur le levier (2), qui verrouille le levier (2), dans la position de base, sur la partie de base (1), par complémentarité de forme et le libère dans la position de déverrouillage, le verrou (10) étant conçu de manière mobile, en plus d'une position de base et d'une position de déverrouillage, vers une position de roue libre, dans laquelle un élément de pression (33), réalisé sur le verrou (10) maintient le cliquet de blocage (22) hors emboîtement dans la roue à cliquet (5).

9. Dispositif à cliquet selon la revendication 8, **caractérisé en ce que** le verrou (10) est logé de manière mobile longitudinalement sur le levier (2).

10. Dispositif à cliquet selon la revendication 8 ou 9, **caractérisé par** des moyens de limitation de mouvement (32 ; 31, 36), qui bloquent, lorsque le levier (2) est fermé, un mouvement du verrou (10) vers sa position de roue libre.

11. Dispositif à cliquet selon la revendication 10, **caractérisé en ce que** les moyens de limitation de mouvement sont constitués d'une butée conçue comme une saillie (32) au niveau du cliquet de blocage (22) et d'une contrebutée (31, 36) au niveau du verrou (10).

12. Dispositif à cliquet selon l'une des revendications précédentes, **caractérisé par** des moyens de retenue (32, 31), qui bloquent le verrou (10), lorsque le levier (2) est fermé, dans sa position de roue libre, les moyens de retenue étant constitués de saillies (32, 31) sur le cliquet de blocage (22), s'emboîtant entre elles dans la direction de mouvement du verrou (10) et du verrou (10).
